# EUROPEAN PATENT SPECIFICATION

(11) **EP 0 793 622 B1**
(45) Date of publication and mention of the grant of the patent: **25.06.2003**
(21) Application number: 95944759.0
(22) Date of filing: 29.09.1995
(51) Int. Cl.: C02F 3/10, B01J 19/30, C12M 1/14, B29C 47/00

(54) **A CARRIER MEDIUM TO RETAIN A BIOFILM FOR CLEANING WASTE WATER AND A PROCESS FOR THE PRODUCTION OF THIS CARRIER MEDIUM**
TRÄGERMEDIUM ZUR AUFNAHME EINES BIOFILMS ZUR REINIGUNG VON ABWASSER UND VERFAHREN ZUR HERSTELLUNG DIESES TRÄGERMEDIUMS
MILIEU DE SUPPORT PERMETTANT DE RETENIR UNE BIOPELLICULE DESTINEE A L'EPURATION D'EAUX USEES ET PROCEDE DE PRODUCTION DE CE MILIEU DE SUPPORT

(30) Priority: 04.10.1994 DK 114894
(43) Date of publication of application: 10.09.1997
(73) Proprietor: Pedersen, Björn, DK-6000 Kolding (DK)
(72) Inventor: Pedersen, Björn, DK-6000 Kolding (DK)
(74) Representative: Holme, Edvard
(86) International application number: DK9500393
(87) International publication number: WO96010542

(56) References cited:
- EP-A- 0 302 965
- EP-A- 0 477 831
- WO-A-84/00901
- DE-A- 4 022 552

## Description

This invention relates to a carrying medium to retain a biofilm in a fluid, e.g. waste water, comprising a number of carrying elements having close-set pores.

Such a carrier medium is known from e.g. the published DE application No. 40 22 552 A1 which describes a porous filtermaterial which can be of hard materials, such as clay, glass, foamed glass (German: Schaumglas), perlite, stoneware, ceramics, porcelain and quartz, and a stiff and hard plastic material also can be used. The mentioned filter material has pores in form of capillary tubes which have the effect of obtaining, at the same time, a not wanted uncontrollable aerobic and anaerobic reaction.

From the lay open publication DK No. 152590 B is known another carrying medium which consists of stainless steel, certain synthetic types of plastic, or glass and other non corrosive materials in form of elements with a mainly netformed inner structure. In none of the three dimensions of the space these elements have a relative small extension and they therefore can contain a deep coherent biomass inside the net structure, whereby uncontrollable aerobic as well as anaerobic reactions can take place.

In the patent specification GB 1,034,760 an aerated filter for biological cleaning of waste water is described. The filter is constructed of packed elements in the form of e.g. balls, cubes, rings, tubes, cones, gratings and nets. For the production of these elements, an inactive expanded polymeric materials is used, e.g. polyurethane, polyvinylcloride, polystyrene, polypropylene or polyamide. The material can be stiff to make the packed filter sufficiently selfcarrying, and in all instances the elements must have such a form that they can be packed to a filter in a way leaving free passage for air and liquid through the filter. This excludes that the elements can have form of flat discs which by packing would place themselves on top of each other in a pattern which totally or partly would block the passage through the filter.

Further it is to be assumed that the filter elements for being able stable to support each other in one or more areas, while, at the same time, there moreover must be a sufficiently large distance between the elements for allowing the filter to function effectively, they need to have such a large spacious extension that there, as in the previous case, will be formed a deep coherent biomass where both aerobic and anaerobic uncontrolled reactions can take place.

The same is the case for the medium to carry a biofilm known from the European patent application No. 0 302 965 A2, as this carrier medium consists of an extruded bar that can be divided into cylindrical or cubical elements having about the same extension in all three of the dimensions. The material used is mainly based on burned diatomite with an additive of inorganic binder, burned out organic materials, an organic polymeric aid, an organic solvent, like kerosene, diesel oil, alcohol or melted vax. The finished material contains a porosity as mainly is coming from the used diatomite and it is relatively fragile and vulnerable and therefore unsuitable for serving as loose elements in a fluid stream where the elements constantly will be inclined to come into collision and rub against each other in a way as they will not be able to stand.

The object of the invention is to disclose a carrier medium of the type mentioned in the opening paragraph having carrying elements as can safely retain a biofilm, as is durable during even a long time staying in a fluid stream, as in proportion to the volume has a larger surface than known hitherto and a corresponding higher effect of cleaning, and as is able to secure a controlled activity of the biofilm without any risk for a simultaneous aerobic and anaerobic reaction.

This is, according to the invention, obtained by forming the carrying elements as thin discs- or ringshaped flakes of a relatively hard material. These flakes have a very large easily accessible surface upon which the micro-organisms of the biofilm can be fixed. The porosity's have form of low grooves which at a maximum can have a thickness corresponding to the indentations of the pores causing, as the flakes are thin, that there cannot - as in the carrying medium known - be created a deleterious or unwanted capillary effect.

The micro-organisms are in relation to the passing stream of water sheltered by the low indentations on both sides of the flakes whereby the biofilm can be kept in peace even under very strong turbulence and pulsation in the water. This makes it possible to establish a culture of fixed and easily accessible micro-organisms in a hitherto unknown scale and the created biofilm will, owing to the protected shelter position, be able to regenerate relatively fast by an eventual accident.

As the biofilm is in the low grooves the film it is so thin that a direct contact with the waste water, the content of this and the air is secured. The distance between a micro-organism and the water cannot be larger than half thickness of the flake, i.e., by way of example, 0.3 mm by a 0.6 mm thick flake.

This short distance moreover entails the advantage that there cannot or only with difficulty occur anaerobic conditions behind an aerobic biofilm as the biofilm is so thin that oxygen will diffuse through the film and destroy an eventually beginning anaerobic condition.

Thereby the total area, upon which the biofilm is fixed, is fully utilised for the purpose wanted, whereby the area of the carrying medium as is at the disposal for the cleaning process is optimally utilised. The cleaning process will moreover become biologically controllable which is very advantageously by, among other things, industrial fermentation.

The short distance between the micro-organisms and the content of the waste water furthermore facilitates the cleaning process which, to a great extend, relies on the activity of the micro-organisms or how good the diffusion through the cellwall takes place. The proportions of this diffusion is increased when the micro-organisms are coming in the best possible contact with the waste water to be cleaned or, in other words, when the microfilm is in the porosity's of the flakes.

Flakes placed in e.g. waste water can in eventual dependence of the proportions of the growth have a larger or lesser density than this waste water. In both cases the flat flakes will seek towards each other under influence of the passing stream of water. The water must therefore traverse a far longer way than will be the case when e.g. ball or cubic formed elements are used. Thereby increasing the cleaning capacity of a cleaning module having a given volume.

A biofilm has a tendency to grow immoderately. To avoid this the flat flakes are, according to the invention, produced of a hard material. Acted on by the waste water flowing through and by the injected air the flakes will hit each other and rub against each other whereby the surplus of biomass advantageously is scraped off owing to the hardness of the flakes.

The invention also relates to a process for production of the above mentioned carrying elements of a plastic material in the shape of a granulate or a powder which is mixed with a foaming detergent, whereafter the mixture is led to an extruder and heated in such a way that the plastic material is brought into a plastic condition while the foaming detergent by foaming is filling the material with cells under a gas overpressure and the foamed plastic material then is extruded from the nozzle of the extruder to a bar cooled to a partly plastic condition and cutted up into discs so thin that, at any rate, a great part of the cells behind the cuts are bursted by the overpressure of the gas.

When a foaming detergent initially has been added to the plastic material this is during the extrusion filled with small closed cells, some of which are, in dependence of the pressure and the temperature, on the way through the extruder assuming form of elongated ellipses extending in the longitudinal direction of the bar. Other cells will be more or less spherical.

When the cut discs are sufficiently thin the knives will to a great extend cut the elongated cells transversely, thereby open them, while the numerous about spherical cells between the cuts not at the same time will be cut through and opened.

When the plastic material has been cooled to a temperature where it can be cut into thin discs, but not yet has obtained its full strength, and the foaming detergent has created a sufficient overpressure in the closed cells, these will be inclined to burst and open towards the surface or e.g. the already opened longitudinal cells.

In this way is obtained a total surface which is very much larger than the surface of the conventional carrying medium. The surface furthermore consists of pores which mostly debouch perpendicular into a free surface where the biofilm therefore can obtain the greatest possible effect of shelter.

The invention will be explained more fully below with reference to the drawing, in which

Fig. 1 is a view, seen from the side, of an arrangement where an extruder is producing a foamed plastic bar which is cutted into thin discs which form the carrying medium according to the invention.

Fig. 2 is a view of the same, seen after the line II - II in figure 1.

Fig. 3 is in a larger scale a perspective view of a cutted disc according to the invention.

Fig. 4 is cross sections taken through a number of the disc shown in fig. 3, freely floating in the passing waste water to be cleaned.

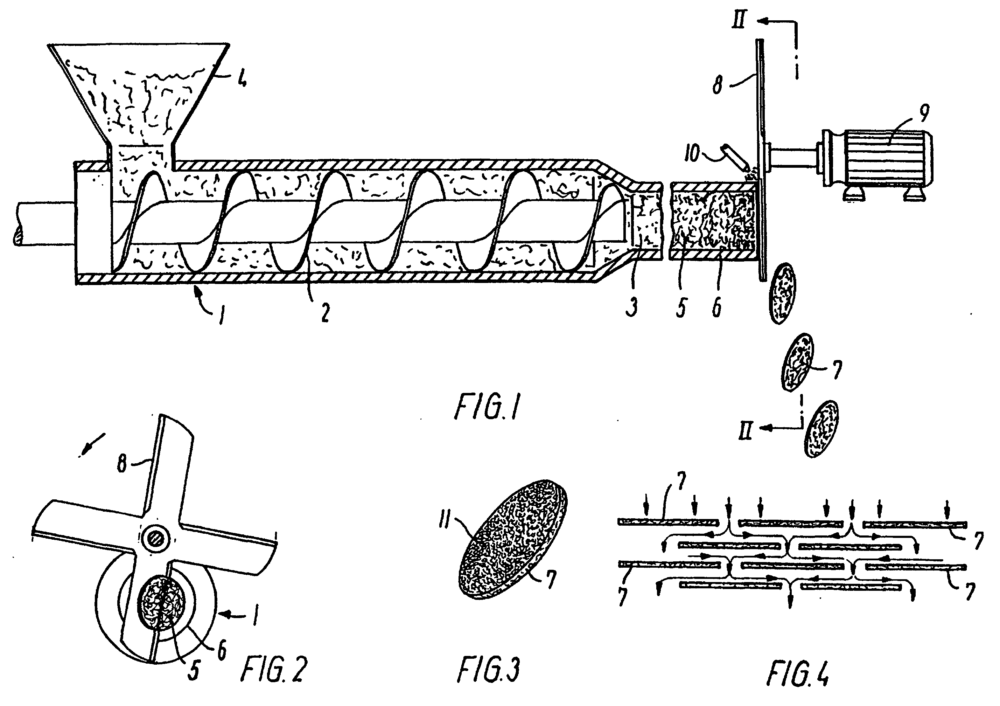

In fig. 1 is seen an extruder 1 having a worm 2, a nozzle 3, and a funnel 4 for filling with a plastic material mixed with a suitable foaming detergent.

When the extruder is working the mixture is heated by a heating means, not shown, and extruded from the nozzle 3 of the extruder in form of a bar 5. This bar is outside the extruder supported by e.g. a tube 6 and at the end of this tube cutted into thin discs 7 by means of, in this case, four rotating knives 8 which are driven by a motor 9. To obtain a clean cut the knives are sprayed from a nozzle 10 with e.g. alcohol cooling the knives and acting as a lubricant in the cut. In stead of this arrangement the knives can pass through an underlying vessel containing the cooling lubricant.

As mentioned the plastic material is heated in the extruder such that it is brought into a plastic condition causing it to be workable in the extruder and to be formed to a bar in the nozzle.

At the same time the foaming detergent is foaming the plastic material whereby forming in this a very large number of small, closed, initially about spherical cells which are filled with a gas having a higher pressure than the pressure of the ambient environments, i.e. more than about 1 bar.

Some of these cells are, during the working in the extruder, squeezed together and are leaving the nozzle in form of elongated elliptical tubes while other cells, to a larger or lesser extent, keep their originally spherical form.

On the stretch from the nozzle to the knives the bar in the tube 6 is cooled to a temperature where the bar is sufficiently hard to stand a cutting into thin discs.

The temperature is not lower, however, than the bar still has a partly plastic condition and those cells, which has not been cutted by the knives, as is the case for most of the elongated cells, therefore are bursted by the overpressure in the cells which thereby open towards the open air or towards one or more of the cutted cells.

Fig. 3 illustrates a singular cutted disc 7 and shows how the pores 11 are juxtaposed close-setted all over the surface of the disc.

The thickness of the discs can advantageously be between 0.1 and 2 mm whereby the biofilm in the indentations of the flakes all advantageously obtain a very small distance to the waste water to be cleaned and to the air contributing to this process.

Advantageously the flakes furthermore can be roundish having a diameter between 2 and 50 mm.

Fig. 4. illustrates how the waste water is streaming past a number of discs which, owing to their thin, flat form, will be inclined to place themselves side by side in the water, thereby forming a large number of narrow passages which force the water to traverse a very long way of streaming. The water and the impurities in this thereby obtain a prolonged and intimate contact with a large amount of micro-organisms, whereby a cleaning module having a given volume is secured a very much larger cleaning capacity than known hitherto.

For more explicitly to elucidate the effect of the carrying medium in relation to known carrying medium tests were carried out based on the following specification:

| | |
|---|---|
| Raw material | Polyethylene (PE) |
| Type/Form | Circular, porous disc |
| Diameter | about 20 mm |
| Height | about 1 mm |
| Number of pieces/m 3 | about 830.000 |
| Weight | about 280 kg/ m³ |
| Specific density | about 0.65 g/cm³ |
| Surface | about 120.000- 150.000 m²/ m³ |

In two series of experiments the carrying medium, according to the invention, was tested partly in comparison with other carrying medium and partly in comparison with a reactor without carrying medium.

The experiments took place in three pieces of 3 1 glass reactors which were aerated from below with pressured air via a perforated plate, and the reactors were continuously filled from a store-container to which the treated water was recirculated. The waste water was taken from a municipal purifying plant, and each of the experiment reactors was inoculated with 100 ml micro-organisms containing sludge.

Analysis were continuously carried out for:
- Demand of Oxygen
- Ammonium
- Nitrate and Nitrite
- pH-value

### Experiment 1

In this experiment was tested which influence the carrying medium, according to the invention, had on the cleaning effect of municipal waste water, compared partly with another carrier medium consisting of a particularly burned porous clay and partly without any carrying medium.

| | |
|---|---|
| Reactor 1.1 | Particularly burnt porous clay Volume: about 1 litre |
| | |
| Reactor 1.2 | Plastic carrying medium according to the invention Volume: about 1 litre |
| | |
| Reactor 1.3 | Without carrying medium Volume: about 1 litre |

The initial concentration of the oxygen demand of the waste water was between 1.000 and 1.260 mg O₂/l, and the initial concentration of the ammonium content was about 52 mg/l. After 4 days of experiments the oxygen demand was strongly reduced in all three of the reactors. No significant difference of the oxygen demand was noted between reactor 1.1 and 1.2 as reactor 1.1 had reduced the oxygen demand with 77 % and reactor 1.2 with 68 %.

The nitrification, i.e. the decomposition of ammonium, was in all cases finished in 7 days. In the first 4 days the reactor with the plastic carrying medium of had a remarkably larger reaction, as the ammonium content in reactor 1.2 was reduced with 53 % while only with 28 % in reactor 1.1.

Such this series of experiments has proved that the large surface of the carrying medium, according to the invention, does not produce any directly advantage concerning the reduction of the oxygen demand, but facilitates, on the other hand, the nitrification to a considerable extent.

### Experiment 2

This series of experiments serves to answer the following questions:
a) Does the larger surface of the carrying medium, according to the invention, cause the expected larger cleaning effect in proportion to other carrying medium with lesser surfaces?.
For this purpose there was used 330 ml plastic carrying medium, according to the invention, and 1.000 ml particularly burned porous clay, respectively.
b) Has the specific form and the choice of material of the carrying medium, according to the invention, a positive effect on the capability of the compressed air to create turbulence in the reactor ?.

| | |
|---|---|
| Reactor 2.1 | Particularly burned porous clay Volume: about 1 litre |
| | |
| Reactor 2.2 | Plastic carrying medium, according to the invention Volume: about 330 ml |

The initial concentration of the waste water:
- Demand of Oxygen 700,00 mg O₂/l
- Ammonium 30,00 mg/l
- Nitrate 24,00 mg/l
- Nitrite 0,86 mg/l
- pH-value 7,6

After 4 days the oxygen demand was strongly reduced in all three of the reactors such as appearing from the following percentage statements:
- particularly burned porous clay (reactor 2.1) 75 %
- PE - medium (reactor 2.2) 74 %

This result proves that there are no significant differences between the reactors concerning the reduction of oxygen demand.

It is however worth noting that a reduction of the plastic carrying medium to 1/3 of the volume of the other carrying medium did not have any noticeable influence on the effect of cleaning, such that, concerning the demand of oxygen, there consequently can be obtained the same result as obtained with the other carrying medium but with a considerable smaller consumption of volume of the carrying medium, according to the invention.

Regarding the nitrification, after the first 6 days the reactor filled with the plastic material, according to the invention, had a significant better efficiency such as appearing from the following results.
- Particularly burned porous clay (Reactor 2.1) : no reaction
- Plastic carrying medium, according to the invention (reactor 2.2) : 99.5 %

Also by this experiment the larger specific surface of the plastic carrying medium had proved to be of lesser importance concerning the reduction of the oxygen demand, while the decomposition of ammonium to nitrite and nitrate, on the other hand, proved to have an even very large effect.

## Claims

1. A carrier medium to retain a biofilm in a fluid, e.g. waste water, consisting of a number of discs- or ringshaped plastic flakes having close-set pores, **characterized in that** at least a great part of the pores are former closed cells bursted by an overpressure of gas in the cells, and that the discs or rings has a surface area in proportion to volume of between 120.000 and 150.000 m²/m³.

2. A carrier medium according to claim 1, **characterized in that** the flakes have a thickness between 0.1 and 2.0 mm.

3. A carrier medium according to claim 1, **characterized in that** the flakes are round and have a diameter between 2 and 50 mm.

4. A process for producing a carrier medium according to any of the claims 1 to 3 comprising the steps of,
- mixing a plastic material such as a plastic granulate or a plastic powder with a foaming detergent,
- leading the mixture of the plastic material and the foaming detergent to an extruder,
- heating the plastic material for bringing said plastic material into a plastic condition and for said foaming detergent to foam the plastic material thereby forming, a large number of small, closed, mainly spherical cells having a pressure higher than the pressure of the ambient environments,
- extruding the plastic material through a nozzle of the extruder to form an extruded bar, in which some of the mainly spherical cells are squeezed to an elongated form while other cells are keeping their spherical form,
- cooling the extruded bar,
- by means of knives cutting the cooled bar into discs or rings so thin that at least a great part of the cells behind the cuts are bursted by the overpressure of the gas, and
- that the discs or rings has a surface area in proportion to volume of between 120.000 and 150.000 m²/m³.

5. A process according to claim 4, **characterized in that** the knives are cooled.

6. A process according to claim 4 or 5, **characterized in that** some of the cells are opened towards the open air by being cutted through of the knives, during cutting the bar into thin flakes, and other cells are opened towards the open air or towards one or more of the cutted cells by being bursted by the overpressure in the cells.

## Patentansprüche

1. Ein Trägermedium zum Aufnehmen eines Biofilms in einem Fluid, beispielsweise einem Abwasser, bestehend aus einer Vielzahl von scheiben- oder ringförmigen Kunststoffflocken mit dicht aneinander liegenden Poren, **dadurch gekennzeichnet, dass** wenigstens ein Teil der Poren zuvor geschlossene Zellen sind, die durch die durch den Überdruck eines Gases in den Zellen aufgebrochen sind und dass die Scheiben oder Ringe ein Verhältnis zwischen Oberfläche und Volumen zwischen 120.000 und 150.000 m³/m² haben.

2. Ein Trägermedium nach Anspruch 5, **dadurch gekennzeichnet, dass** die Flocken ein Dicke zwischen 0,1 und 0,2 mm haben.

3. Ein Trägermedium nach Anspruch 5, **dadurch gekennzeichnet, dass** die Flocken rund sind und einen Durchmesser zwischen 2 und 50 mm haben.

4. Ein Verfahren zum Herstellen eines Trägermediums nach einem der Ansprüche 1 bis 3, mit den folgenden Schritten:
- Vermischen eines Kunststoffmaterials, etwa einem Kunststoffgranulat oder einem Kunststoffpuder mit einem schaumbildenden Detergens,
- Führen des Gemisches des Kunststoffmaterials und des schaumbildenden Detergens zu einem Extruder,
- Erwärmen des Kunststoffmaterials, um das Kunststoffmaterial in einen plastischen Zustand zu bringen und um das Aufschäumen des Kunststoffmaterials durch das schaumbildende Detergens zu bewirken, wodurch eine große Anzahl geschlossener, im wesentlichen kugelförmiger Zellen mit einem Druck, der höher als der Umgebungsdruck ist, gebildet werden,
- Extrudieren des Kunststoffmaterials durch eine Düse des Extruders zur Bildung eines extrudierten Strangs, in dem einige der im wesentlichen kugelförmigen Zellen in eine längliche Form gequetscht werden, während andere Zellen kugelförmig bleiben,
- Kühlen des extrudierten Strangs,
- Schneiden des abgekühlten Strangs mittels Messern in so dünne Scheiben oder Ringe, dass wenigstens ein großer Teil der Zellen hinter dem Schnitt durch den Überdruck des Gases aufbersten, und
- dass die Scheiben oder Ringe ein Verhältnis zwischen Oberfläche und Volumen zwischen 120.000 und 150.000 m³/m² haben.

5. Ein Verfahren nach Anspruch 4, **dadurch gekennzeichnet, dass** die Messer gekühlt werden.

6. Ein Verfahren nach Anspruch 4, 5 oder 6, **dadurch gekennzeichnet, dass** einige der Zellen in Richtung auf die Umgebungsluft durch das Schneiden mittels der Messer geöffnet werden und andere Zellen gegenüber der Umgebungsluft oder gegenüber eine oder mehrere der geschnittenen Zellen durch Zerbersten aufgrund des Überdrucks in den Zellen geöffnet werden.

## Revendications

1. Milieu porteur pour retenir un biofilm dans un fluide, par exemple des eaux usées, consistant en plusieurs flocons de plastique en forme de disque ou d'anneau comportant des pores situés proches les uns des autres, **caractérisé en ce qu'**au moins une grande partie des pores est constituée d'anciennes cellules fermées, éclatées par une surpression de gaz dans les cellules, et **en ce que** les disques ou anneaux ont une superficie en proportion du volume d'entre 120.000 et 150.000 m²/m³.

2. Milieu porteur selon la revendication 5, **caractérisé en ce que** les flocons ont une épaisseur entre 0,1 et 2,0 mm.

3. Milieu porteur selon la revendication 5, **caractérisé en ce que** les flocons sont circulaires et ont un diamètre entre 2 et 50 mm.

4. Procédé de production d'un milieu porteur selon l'une quelconque des revendications 1 à 3 comprenant les phases :
- de mélange d'une matière plastique, telle qu'un granulat plastique ou une poudre plastique, avec un détergent moussant,
- d'amenée du mélange de la matière plastique et du détergent moussant à une extrudeuse,
- de chauffe de la matière plastique pour amener ladite matière plastique à une condition plastique et pour que ledit détergent moussant fasse mousser la matière plastique, en formant ainsi un grand nombre de petites cellules fermées, principalement sphériques, ayant une pression supérieure à la pression des environnements ambiants,
- d'extrusion de la matière plastique à travers une buse de l'extrudeuse pour former une barre extrudée, dans laquelle certaines des cellules principalement sphériques sont pressées en une forme allongée, tandis que les autres cellules conservent leur forme sphérique,
- de refroidissement de la barre extrudée,
- de découpe, au moyen de lames, de la barre refroidie en disques ou anneaux tellement minces qu'au moins une grande partie des cellules derrière les coupes éclatent par la surpression du gaz et
- de sorte que les disques ou anneaux ont une superficie en proportion du volume d'entre 120.000 et 150.000 m²/m³.

5. Procédé selon la revendication 4, **caractérisé en ce que** les lames sont refroidies.

6. Procédé selon la revendication 4, 5 ou 6, **caractérisé en ce que** certaines des cellules sont ouvertes vers l'air libre, en étant coupées par les lames, durant la découpe de la barre en flocons minces, et d'autres cellules sont ouvertes vers l'air libre ou vers une ou plusieurs des cellules coupées en étant éclatées par la surpression dans les cellules.
